# FASCICULE DE BREVET EUROPEEN

(11) **EP 3 740 375 B1**
(45) Date de publication et mention de la délivrance du brevet: **27.10.2021**
(21) Numéro de dépôt: 19704657.6
(22) Date de dépôt: 09.01.2019
(51) Int. Cl.: B29C 64/153, B29C 64/165, B29C 64/35, B29C 64/364, B33Y 10/00, B33Y 40/00, B29C 71/00, B22F 3/24, B29C 64/357

(54) **PROCÉDÉ DE POST-TRAITEMENT D'UNE PIÈCE OBTENUE PAR FABRICATION ADDITIVE À PARTIR D'UNE POUDRE D'UN MATÉRIAU PLASTIQUE**
VERFAHREN ZUR NACHBEARBEITUNG EINES DURCH GENERATIVE FERTIGUNG ERHALTENEN TEILS AUS EINEM KUNSTSTOFFPULVER
METHOD FOR POST-PROCESSING A PART OBTAINED BY ADDITIVE MANUFACTURING FROM A PLASTIC MATERIAL POWDER

(30) Priorité: 15.01.2018 FR 1850297
(43) Date de publication de la demande: 25.11.2020
(73) Titulaire: Chanel Parfums Beauté, 92200 Neuilly-sur-Seine (FR)
(72) Inventeur: SALCIARINI, Christian, 83400 HYERES (FR); BERTUCCHI, Quentin, 92600 ASNIERES SUR SEINE (FR)
(74) Mandataire: Santarelli
(86) Numéro de dépôt international: PCT/FR2019/050037
(87) Numéro de publication internationale: WO 2019/138183

(56) Documents cités:
- WO-A1-2011/145960
- US-A1- 2006 251 826
- US-B2- 7 285 234

## Description

La présente invention concerne le domaine des procédés industriels permettant l'obtention par fabrication additive de pièces en matériau plastique de petites dimensions, telles que des applicateurs de produit cosmétique.

L'application d'un produit cosmétique liquide, fluide ou en poudre est généralement réalisée à l'aide d'un applicateur comportant des poils ou des dents permettant de retenir, comme les poils d'un pinceau, le produit cosmétique. Les produits cosmétiques englobent dans le présent document notamment tous les produits pour le maquillage de la peau, des lèvres ou des phanères. Les produits cosmétiques englobent également les produits de soin, notamment les formules de soin liquides, destinés à une application sur la peau, les lèvres et les phanères.

Bien que l'invention concerne potentiellement toute pièce plastique obtenue par synthèse additive pour laquelle il est intéressant de garantir l'absence de particules détachées suite à la fabrication additive ou susceptibles de se détacher lors de l'utilisation de la pièce, l'invention présente un intérêt particulier dans le cadre d'un applicateur pour un produit cosmétique destiné à être appliqué à proximité des yeux, notamment sur les cils ou les paupières. Par exemple, le produit cosmétique peut être un mascara, une ombre à paupières, ou un maquillage pour le contour des yeux désigné communément par le terme anglophone « eye-liner ».

Un article de mascara, ou « mascara », comprend classiquement un étui, un réservoir de mascara et un applicateur. Il existe plusieurs types d'applicateurs, ceux de type « goupillon », ceux injectés et ceux fabriqués par fabrication additive (parfois appelée « synthèse additive »). La fabrication additive désigne les procédés de fabrication par ajout ou agrégation de matière, également couramment désignés par l'expression « impression tridimensionnelle » ou « impression 3D ».

Un applicateur de type goupillon comporte une brosse qui comprend des poils formés par des fibres emprisonnées dans un fil métallique torsadé formant l'âme de l'applicateur.

Un applicateur injecté est généralement formé d'une seule pièce et comporte des poils ou des dents en matière plastique par exemple.

Un applicateur fabriqué par fabrication additive est lui aussi généralement d'une seule pièce et peut être formé par exemple à partir d'une poudre de polymères thermoplastiques.

Les procédés traditionnels d'obtention d'une pièce par fabrication additive permettent l'obtention de pièces ayant des caractéristiques dimensionnelles très précises. Néanmoins, ces applicateurs peuvent présenter des particules détachées ou susceptibles de se détacher lors de l'application. Cela altère la qualité de l'application et peut se révéler problématique en particulier lors de l'application d'un produit cosmétique à proximité des yeux, par exemple sur les paupières. En particulier, des particules présentant une certaine taille peuvent être irritantes pour la cornée.

Outre le domaine de la cosmétique, la production par fabrication additive de pièces en matériau plastique se développe dans de nombreux domaines techniques, notamment le domaine médical ou celui de la mécanique de précision, dans lesquels il est intéressant ou important de garantir l'absence de particules résiduelles ou susceptible de se détacher d'une pièce obtenue par fabrication additive.

L'invention se rapporte à un procédé de post-traitement de pièces plastiques obtenues par fabrication additive résolvant l'un au moins des problèmes précités. Le post-traitement selon l'invention s'inscrit dans le cadre d'un procédé de fabrication par fabrication additive également objet de l'invention.

La publication WO2011/145960 décrit un procédé de fabrication additive par frittage d'une poudre d'un matériau plastique suivi d'une étape de dépoudrage et d'un post-traitement, pouvant inclure un sablage, pour améliorer l'état de surface. La publication US2006/251826 décrit un appareil de soufflage ionisant utilisé pour traiter des particules de plastique, pour faciliter leur enrobage par un adhésif; ces particules sont utilisées dans des procédés de fabrication additive par frittage sélectif. La publication US7285234 décrit un procédé de fabrication additive par frittage d'une poudre d'un matériau plastique, comportant une étape de contacte de ladite poudre avec des particules chargées.

L'invention porte ainsi sur un procédé de post-traitement d'une pièce obtenue par fabrication additive par frittage d'une poudre d'un matériau plastique, pour l'élimination des particules détachées de ladite pièce ou partiellement frittées, le procédé comportant des étapes successives de :
- décapage ; et
- soufflage ionisant.

La succession des étapes mises en œuvre dans le procédé objet de l'invention permet une élimination des particules dans le produit obtenu par fabrication additive. En particulier, un décapage, c'est-à-dire le décollement ou l'élimination de la pièce produite des résidus, saletés et éléments non souhaités, suivi d'un soufflage ionisant permet de garantir l'absence de particules détachées ou susceptible de se détacher lors de l'utilisation de la pièce.

Les particules peuvent notamment comporter :
- des grains de poudre du matériau employé pour la fabrication qui reste bloquée dans des interstices de la pièce ou dans des poils qu'elle comporte (par exemple dans le cas d'une brosse obtenue par fabrication additive) ;
- des grains de poudre incomplètement frittés lors de la fabrication additive ;
- des résidus de sablage, lorsque le procédé comporte une étape de sablage.

L'élimination des particules est une problématique important dans de nombreux domaines techniques, notamment le domaine médical, alimentaire, ou cosmétique. En particulier, la demanderesse a constaté que dans le domaine des produits cosmétiques, il est important que les applicateurs employés à proximité des yeux (par exemple les brosses à mascara) soient exemptes de particules, notamment totalement exemptes de particules de plus grande taille supérieure à 500 microns qui sont irritantes pour la cornée.

Le procédé permet, selon les paramètres employés pour chaque étape, l'élimination des particules de tailles non souhaitées dans le produit final.

L'étape de décapage peut comporter (ou être constituée) d'une étape de sablage de ladite pièce. Le sablage peut par exemple employer des microbilles de verre d'un diamètre compris entre 45 et 90 microns.

Le procédé de post-traitement peut comporter une étape de pré-soufflage préalable à l'étape de sablage.

Le procédé de post-traitement peut comporter en outre une étape finale de lavage. L'étape de lavage (S3) peut comporter le lavage de la pièce dans un solvant non-aqueux.

Par exemple, les étapes de sablage et de soufflage ionisant peuvent être réalisées par lots de 300 à 10 000 pièces.

Un mode de réalisation porte également sur un procédé de fabrication d'une pièce en matériau plastique, comportant une étape de fabrication additive par frittage d'une poudre du matériau plastique, suivie d'une étape de dépoudrage et d'un procédé de post-traitement tel que précédemment défini.

Le matériau plastique employé peut être un polyamide, de préférence un polyamide aliphatique, par exemple du polyamide 11.

Le procédé de fabrication peut comporter, avant l'étape de fabrication additive, une étape de conditionnement de la poudre de polyamide comportant :
- la fourniture de poudre neuve ne présentant que des grains dont la plus grande dimension est inférieure ou égale à 150 microns ;
- la fourniture de poudre dite usagée, ayant déjà servi à une étape de fabrication additive, et le calibrage de ladite poudre usagée pour qu'elle ne présente que des grains dont la plus grande dimension est inférieure ou égale à 150 microns ;
- le mélange de la poudre neuve et de la poudre usagée calibrée selon un rapport poudre neuve/poudre usagée compris entre 70/30 et 50/50, de préférence de l'ordre de 60/40.

Un mode de réalisation porte enfin sur un procédé de production d'une pièce comportant un procédé de fabrication tel que précédemment défini, et comportant en outre une étape de qualification comportant la détermination, dans un lot d'un nombre prédéterminé de pièces, du nombre de particules détachées ou partiellement frittées résiduelles de plus grande dimension supérieure à une dimension prédéfinie, et, si ledit nombre de particules est non nul, la modification d'au moins un paramètre d'une étape du post-traitement, puis la succession de tels procédés de fabrication et d'étapes de qualification jusqu'à ce que ledit nombre de particules de plus grande dimension supérieure prédéfinie soit nul.

D'autres particularités et avantages de l'invention apparaîtront encore dans la description ci-après.

Aux dessins annexés, donnés à titre d'exemples non limitatifs :
- la **figure 1** représente sous forme d'un diagramme de blocs un procédé de post-traitement d'une pièce obtenue par fabrication additive conforme à un premier aspect de l'invention ;
- la **figure 2** représente sous forme d'un diagramme de blocs une première variante du procédé de la **figure** 1 ;
- la **figure 3** représente sous forme d'un diagramme de blocs un procédé de post-traitement conforme un mode de réalisation de l'invention, comportant les étapes du procédé de la figure 1 et des étapes optionnelles ;
- la **figure 4** représente sous forme d'un diagramme de blocs un procédé de fabrication d'une pièce conforme à un mode de réalisation comportant un procédé de post-traitement selon le premier aspect de l'invention.

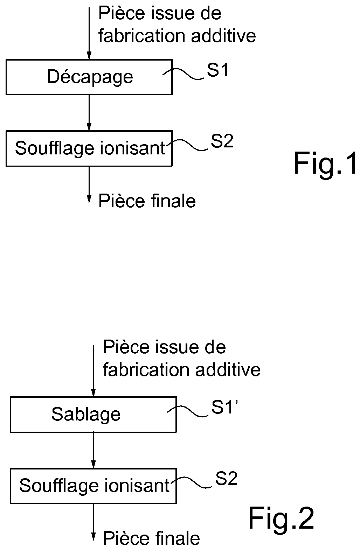

Le procédé présenté à la **figure 1** présente les étapes d'un procédé, conforme à un mode de réalisation de l'invention, de post-traitement d'une pièce obtenue par fabrication additive, à savoir par frittage d'une poudre d'un matériau plastique.

Le procédé comporte une étape de décapage (S1), et une étape de soufflage ionisant (S2). Le procédé est applicable à une pièce ou un ensemble (lot) de pièces. Ayant un intérêt particulier dans un cadre industriel, il est décrit par la suite pour le traitement de plusieurs pièces.

### Décapage(S1)

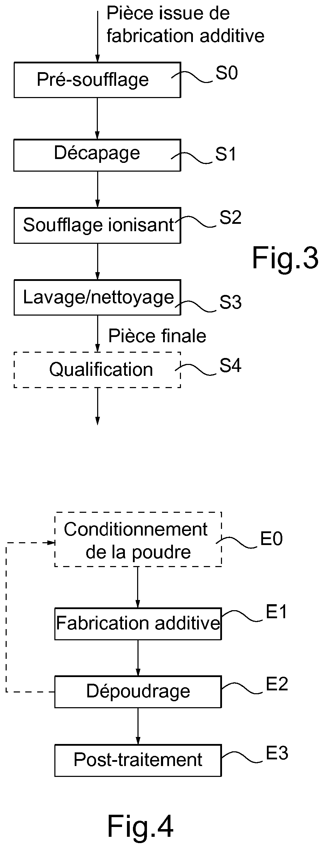

Le procédé de post-traitement des pièces obtenues par fabrication additive débute par une étape de décapage S1. Les pièces sont issues d'une fabrication additive par frittage d'une poudre d'un matériau plastique, par exemple du polyamide de type PA11, comme cela est détaillé en référence à la **figure 4****.** Après la fabrication, les pièces ont été sorties de la poudre et ont pu subir une opération de dépoudrage, également détaillée en référence à la **figure 4** ci-après, mais elles peuvent présenter des particules détachées ou susceptibles de se détacher lors de l'utilisation. Le procédé vise à s'assurer de l'absence de particules, dans certaines plages de dimensions, dans le produit final, c'est-à-dire sur la pièce finale.

Le décapage consiste à exercer une action mécanique à la surface des pièces de sorte à éliminer les éléments non souhaités qui s'y trouvent, comme les grains de poudre détachés ou partiellement frittés ou toute impureté.

Le décapage peut être obtenu par projection d'une substance, fluide ou pulvérulente, à la surface des pièces. Cette projection peut être réalisée dans un tonneau ou tambour rotatif. Par exemple, l'étape de décapage peut correspondre à un sablage (comme dans le procédé de la **figure 2****).**

Dans le cas du décapage de pièces de petite taille, telles que des applicateurs à mascara, l'étape de décapage peut être réalisée par lots de 300 à 10 000 pièces par exemple, notamment de 3000 à 4000 pièces.

### Soufflage ionisant (S2)

Le procédé comporte, après l'étape de décapage S1, une étape de soufflage ionisant S2. En effet, le décapage peut laisser des particules logées des interstices ou des poils de la pièce obtenue par fabrication additive. Les particules sont essentiellement des particules du matériau constitutif de ladite pièce, par exemple des grains de PA11, mais peuvent également être des particules d'un abrasif employé lors de l'étape de décapage S1, le cas échéant (typiquement lorsque le décapage comporte un sablage).

L'ionisation consiste de manière générale à enlever ou ajouter des charges à un atome ou une molécule. Ainsi, les systèmes d'ionisation appelés communément ioniseurs, produisent des ions qui sont des atomes chargés. Les ioniseurs se présentent sous différentes formes. La forme la plus fréquente est celle d'une barre. La barre d'ionisation doit être située à proximité du support à ioniser, typiquement à moins de 50 mm. La demanderesse a identifié que la mise en œuvre d'une étape de soufflage ionisant est particulièrement pertinente dans un procédé de post-traitement de pièces obtenues par fabrication additive, notamment le post-traitement d'applicateurs de produit cosmétique. En effet, dans le nettoyage par soufflage ionisant, l'ionisation permet d'éliminer les effets de l'électricité statique portée par la pièce. Le flux d'air du soufflage permet de séparer les particules résiduelles des pièces, à la surface desquelles elles ne sont plus retenues par l'électricité statique. Les particules ainsi séparées des pièces sont aspirées hors de l'enceinte de soufflage ionisant.

Le soufflage ionisant peut être réalisé dans un tonneau ou tambour identique à celui utilisé pour l'étape de décapage S1, voire dans le même tonneau que celui utilisé pour l'étape de décapage S1.

Pour l'étape de soufflage ionisant S2, le dispositif comporte avantageusement deux systèmes d'ionisation, par exemple deux barres d'ionisation. Une barre est positionnée à l'intérieur du tonneau (ou autre enceinte) et une barre disposée à l'extérieur.

Les paramètres de soufflage suivants peuvent être employés avec succès, notamment pour le post-traitement d'applicateurs de produit cosmétique du type brosse à mascara, ou des pièces de dimensions analogues. Le soufflage ionisant peut être réalisé sous une pression de 4 bars. L'étape de soufflage ionisant S5 peut durer 30 à 40 minutes.

L'étape de soufflage ionisant S5 peut être réalisée par lots de 300 à 10 000 pièces par exemple, notamment de 3000 à 4000 pièces telles que des applicateurs de produit cosmétique.

Bien évidemment, des paramètres proches peuvent être employés avec succès. Par exemple et de manière non limitative, la pression de soufflage peut être de 3 à 5 bars, la durée de soufflage peut être significativement réduite, et être par exemple de l'ordre de 15 minutes ou moins.

Suite à la succession des étapes de décapage et de soufflage ionisant, les pièces, par exemple les applicateurs de produit cosmétique, il est certain que les pièces sont débarrassées des particules de dimensions non souhaitées. Les paramètres précités permettent notamment l'élimination de la quasi-totalité des particules de plus de 150 microns sur un applicateur de produit cosmétique, et l'élimination de la totalité des particules de plus de 500 microns.

La **figure 2** représente un procédé identique à celui de la **figure 1**, dans lequel l'étape de décapage S1 est une étape de sablage S1'.

### Sablage (S1')

Le sablage est une technique connue de nettoyage d'une surface, qui utilise un abrasif projeté à grande vitesse à l'aide d'un gaz comprimé (généralement de l'air) par une buse sur la surface à nettoyer.

Néanmoins, le sablage de pièces issues d'une fabrication additive par frittage d'une poudre d'un matériau plastique nécessite la mise en œuvre de paramètres optimisés. Par exemple, pour des applicateurs de produit cosmétique les paramètres sont adaptés du fait de la petite taille des applicateurs, de la nécessité de sabler des éléments extrêmement fins (à savoir les poils des applicateurs) sans les détruire, de l'intérêt de sabler une grande quantité de pièces en même temps (par exemple de 300 à 10 000 pièces), et de l'importance de détacher des pièces par le sablage toutes les particules susceptibles de se détacher lors de l'utilisation de l'applicateur.

L'étape de sablage S1' permet d'éliminer en particulier les grains de poudre partiellement frittés. Le sablage est réalisé dans une sableuse comportant au moins une buse projetant des billes de verre ayant un diamètre de 45 à 90 microns. Le sablage permet également d'obtenir l'état de surface souhaité sur les pièces. D'autres média abrasifs sont envisageables par exemple du bicarbonate, ou des noyaux de fruits compressés.

Outre la nature et la taille de particules abrasives, le type de machine de sablage, la pression d'injection, la distance de la buse vis-à-vis de la surface du tonneau, sont des paramètres importants pour obtenir les résultats souhaités.

Pour le traitement d'un lot important de pièces (par exemple de l'ordre de 3000 à 4000 pièces) les paramètres suivants ont été déterminés avec succès. Le sablage est effectué dans une sableuse à tonneau rotatif. Le tonneau choisi a un diamètre de 500 mm. Le tonneau tourne à 3 tours par minutes pour assurer le brassage des pièces. Le sablage peut durer de 35 à 45 minutes, par exemple 40 minutes. Les billes sont injectées sous une pression d'air de 2,5 bars.

L'Homme du métier comprendra bien évidemment que l'invention n'est pas limitée à ces paramètres précis, donnés à titre d'exemple.

Le brassage peut être amélioré par l'emploi d'une deuxième buse, soufflant latéralement dans le tonneau et/ou soulevant les pièces par rapport à la surface du tonneau.

La **figure 3** représente un procédé de post-traitement conforme un mode de réalisation de l'invention et comportant des étapes optionnelles. Notamment, le procédé comporte une étape de pré-soufflage (S0) préalable à l'étape de décapage. Le procédé comporte une étape de lavage / nettoyage (S3) successive à l'étape de soufflage ionisant (S2).

En outre, le procédé de la **figure 3** présente une étape finale de qualification (S4), hors procédé de post-traitement.

### Pré-soufflage (S0)

L'étape de pré-soufflage S0 est réalisée sur les pièces avant leur décapage. Cette étape permet de s'assurer que les particules facilement détachables des pièces sont éliminées avant d'attaquer le décapage des pièces. L'étape de pré-soufflage vise ainsi à retirer un maximum de particules en soumettant à un flux d'air sous pression les pièces obtenues par fabrication additive.

L'étape de pré-soufflage peut avantageusement être réalisée dans le tonneau de la machine qui sera utilisée pour l'étape de décapage S1. Le pré-soufflage peut être réalisé pendant 5 à 10 minutes, par exemple 7 minutes, avec deux buses soufflant de l'air à 2,5 bars.

### Lavage / nettoyage (S3)

Un nettoyage complémentaire peut être réalisé dans une étape dite de lavage / nettoyage S3.

On entend par nettoyage tout type d'action permettant une élimination des grains, particules, et autres éléments résiduels à la surface pièces obtenues par fabrication additive, ou dans les poils ou interstices de ces pièces. Le lavage correspond à un type de nettoyage mettant en œuvre un produit de lavage, aqueux ou non.

Un lavage dans une solution appropriée, peut être réalisé. Le lavage peut être réalisé sur un principe de lavage par reflux.

Le dispositif de lavage employé peut comporter plusieurs sections, par exemple :
- un bac de lavage dit bouilleur ;
- un bac de rinçage ;
- une zone d'évaporation ;
- une zone de séchage ; et
- un serpentin à 4°C de condensation permettant de récupérer et de recycler le produit de lavage.

Le bac de lavage peut comporter un panier maillé tournant, et/ou des jets immergés.

Dans les bacs de lavage et/ou de rinçage, les pièces peuvent être soumises à des ultrasons. Les ultrasons utilisés peuvent avoir une fréquence comprise entre 25 kHz et 45 kHz.

Le lavage peut être notamment réalisé dans une solution à 50% d'alcool isopropylique ou de préférence dans une solution chimique de fluorocétone.

Cette solution chimique présente une bonne efficacité dans l'élimination des billes de sablages résiduelles, et plus généralement dans l'élimination des particules de dimensions inférieures à 80 microns, sans altérer les propriétés mécaniques des pièces, notamment des applicateurs de produit cosmétique.

On peut également envisager, de façon additionnelle ou alternative, un tamisage des pièces sous micro-vibration et/ou soufflage. Cela présente également l'avantage d'être réalisé en milieu sec.

### Qualification (S4)

Une étape de qualification S4 peut permettre de s'assurer que les pièces finales obtenues en fin de procédé de post-traitement répondent à certains critères qualitatifs.

En particulier, l'étape de qualification peut permettre de s'assurer de l'absence de particules potentiellement irritantes dans les produits finis.

L'étape de qualification peut être réalisée périodiquement au cours de la production, à intervalles réguliers ou aléatoires, ou plus préférentiellement par prélèvement aléatoire d'un nombre déterminé de pièces dans chaque lot. Un lot peut par exemple être constitué d'un ensemble de 10 000 à 100 000 pièces, et dans chaque lot peuvent être prélevées de 8 à 100 pièces.

Lors de l'étape de qualification, on peut s'assurer qu'aucune des pièces prélevées ne comporte de particules, détachées ou susceptibles de se détacher lors de l'utilisation, dont la plus grande dimension est supérieure à 500 microns.

Il peut également être vérifié le nombre de particules, détachées ou susceptibles de se détacher lors de l'utilisation, de dimension inférieure. Par exemple, il est possible de vérifier le nombre de particules dont la plus grande dimension est comprise entre 150 microns et 500 microns. Par exemple, l'étape de qualification peut permettre qu'un nombre maximum prédéfini de telles particules (non critique pour le consommateur) pour une quantité d'applicateurs donnée est présent (par exemple 7 particules pour un prélèvement de 32 applicateurs dans un lot de 10 000 à 100 000 pièces ou encore 10 particules pour un prélèvement de 50 pièces d'un ensemble de plus de 500 000 pièces). En cas de non-conformité détectée lors de l'étape de qualification, le lot concerné peut être rejeté et détruit. Des mesures de vérification du procédé et/ou de correction des paramètres de fabrication peuvent être prises.

Dans le procédé représenté à la **figure 3****,** l'étape de décapage S1 peut notamment comporter une étape de sablage S1'.

Les étapes optionnelles de pré-soufflage S0 et de lavage / nettoyage S3 décrites ci-dessus peuvent faire varier les paramètres optimaux de réalisation des autres étapes, mais elles peuvent être incorporées indépendamment l'une de l'autre à l'un des procédés selon la **figure** 1 ou la **figure 2****.** L'étape de qualification S4 peut être incorporée à l'un quelconque des procédés selon la **figure 1****,** la **figure 2****,** ou la **figure 3****,** ou de manière générale peut être mené afin de qualifier certaines pièces, quel que soit leur mode d'obtention et le post-traitement qu'elles ont subi.

La **figure 4** représente un procédé de fabrication d'une pièce conforme à un mode de réalisation. Ce procédé comporte une étape de fabrication additive E1, suivie d'une étape de dépoudrage E2 des pièces, elle-même suivie d'un procédé de post-traitement E3 correspondant à un post-traitement conforme à l'invention, par exemple tel que décrit en référence à l'une des **figures 1 à 4****.** Une étape préalable de conditionnement de la poudre E0 peut être prévue optionnellement.

### Fabrication additive (E1)

L'étape de fabrication additive S1 est réalisée par frittage d'une poudre, en particulier une poudre d'un matériau plastique. Le procédé de fabrication additive employé est avantageusement un procédé de fusion sur lit de poudre, liage de poudre, également appelé « Frittage sélectif par laser ».

Un procédé de fusion sur lit de poudre consiste à produire des objets à partir de matériaux en poudre à l'aide d'un ou plusieurs lasers afin de faire fondre de façon sélective les particules de poudre à la surface du lit de poudre, couche après couche, dans une chambre fermée. Le type de poudre utilisée peut être tout type de poudre apte à être utilisé dans un tel procédé.

La poudre employée peut notamment être une poudre d'un polymère thermoplastique, ou une poudre d'un polyamide, de préférence un polyamide aliphatique, par exemple du polyamide 11 , également désigné PA 11, ou de polyacrylamide.

Du polyamide 12 ou PA12 peut également être employé avec succès, bien que le PA 11 lui soit préférable pour certaines applications, notamment la fabrication d'applicateurs de produit cosmétique, car il présente une plus grande souplesse. Un exemple de poudre de PA11 particulièrement adaptée est la poudre commercialisée sous la référence « PA1101 » par la société EOS Materials.

De manière préférentielle, notamment pour la fabrication d'applicateurs de produit cosmétique, la poudre présente des grains dont la plus grande dimension est inférieure ou égale à 150 microns. De préférence, la plus grande dimension est inférieure ou égale à 80 microns, et encore plus préférentiellement inférieure ou égale à 60 microns.

La machine employée pour l'étape de fabrication additive peut être une machine commercialisée sous la dénomination FORMIGA P110 par la société EOS Materials, ou toute machine équivalente.

Lors de l'étape de fabrication, la machine de fabrication additive est en premier lieu chargée en poudre.

Par exemple, la fabrication peut être réalisée dans un bac contenant environ 10 kg de poudre (typiquement pour du PA11). La fabrication peut être réalisée sur plusieurs étages, par exemple entre deux et dix étages, notamment sur sept étages.

La formation de pièces brutes par frittage laser commence alors. Selon un mode de réalisation donné à titre d'exemple, la poudre dans le bac est maintenue à 150°C environ. Le ou les lasers viennent apporter l'énergie supplémentaire nécessaire à la fusion localisée de la poudre. Par exemple, un laser de 25 W peut être employé avec succès.

Plusieurs passes du laser peuvent être nécessaires.

La formation par fabrication additive d'un lot de trois mille à quatre mille pièces (de la taille d'une brosse à mascara) peut prendre environ quinze heures dans ces conditions. A l'issue de cette phase de formation des pièces brutes, l'ensemble doit être refroidi. Dans l'exemple pris précédemment le refroidissement peut durer de l'ordre de quinze heures. Le temps total de l'étape de fabrication additive peut donc être de l'ordre de 30 heures.

Afin d'éviter l'oxydation, le refroidissement est avantageusement réalisé sous gaz neutre, par exemple sous argon.

Afin de pouvoir optimiser les temps de cycle, et plus simplement le temps d'utilisation de la machine de fabrication additive pour la formation de pièces brutes, le refroidissement peut être réalisé hors de la machine, avec mise sous gaz neutre (notamment sous argon) du contenu du bac.

L'étape de fabrication additive E1 est réalisée dans une machine qui utilise un fichier numérique représentant géométriquement la pièce à produire. Le fichier est obtenu après avoir conçu la pièce à réaliser sur un logiciel de conception assisté par ordinateur (CAO). Ce fichier peut être au format STL ou tout autre format de fichier standard utilisable pour une synthèse additive par fusion sur lit de poudre. Le fichier est ensuite traité par un logiciel fourni par le constructeur de la machine utilisée pour la synthèse additive. Ce logiciel découpe en sections le fichier sous la forme d'images numériques (par exemple une centaine d'images) par exemple au format SU ou BFF, chacune d'elles correspondant à une couche du modèle à imprimer, c'est-à-dire à une section de la pièce à réaliser prise dans un plan perpendiculaire à un axe donné. Ces données sont ensuite transmises à la machine de fabrication additive afin qu'elle produise la pièce.

L'étape de fabrication additive aboutit ainsi à la formation de pièces brutes noyées dans de la poudre et gorgées de poudre.

### Dépoudrage (E2)

L'étape de fabrication additive E1 est suivie d'une étape de dépoudrage E2. Cette étape permet de séparer les pièces brutes de la poudre.

La poudre récupérée peut être remployée, comme décrit ci-après dans une étape de conditionnement de la poudre E0. A cette fin, la poudre récupérée peut subir un procédé de tri afin de ne conserver que les grains dont la plus grande dimension est inférieure ou égale à une taille donnée (par exemple 150 microns, 80 microns ou 60 microns).

L'étape de dépoudrage consiste à séparer les pièces brutes de la poudre dans laquelle elles sont noyées, et à éliminer un maximum de poudre portée par la pièce brute (par exemple dans des recoins de la pièce brute, dans les poils d'une pièce brute telle qu'un applicateur de produit cosmétique). Cette étape peut être réalisée manuellement. Par manuellement, on entend qu'un opérateur doit saisir les pièces brutes, individuellement ou par grappes, et en retirer la poudre par agitation, soufflage, et/ou brossage.

L'étape de dépoudrage peut être réalisée de manière automatique, ce qui est avantageux pour la production de pièces, notamment de petites pièces de formes complexes comme les applicateurs de produit cosmétique, à une échelle industrielle.

De manière préférentielle, cette opération est réalisée dans une cabine de dépoudrage afin de garantir la production à une échelle industrielle, par exemple plus de 200 000 pièces par semaine.

Le dépoudrage manuel et a fortiori le dépoudrage automatisé, peut néanmoins laisser de la poudre résiduelle sur les pièces.

Or, pour de nombreuses applications dans divers domaines techniques, l'absence de poudre résiduelle est fondamentale. Par exemple, pour ce qui concerne la production d'applicateurs de produits cosmétiques, en particulier destinés à l'application d'un produit cosmétique à proximité des yeux, la demanderesse a constaté que non seulement il fallait séparer les applicateurs de produits cosmétiques bruts ainsi obtenus de la poudre, mais qu'il était en outre important de garantir l'absence totale de grains détachés de l'applicateur (par exemple retenus dans ses poils) ou susceptibles de se détacher lors de l'utilisation, et dont la plus grande dimension est supérieure à une taille donnée, susceptible d'entrainer une irritation oculaire. Le post-traitement décrit en référence aux **figures 1 à 4** vise à l'élimination totale de ces grains. Typiquement, le post-traitement vise à supprimer toutes les particules supérieures à 500 microns. En effet, des particules de dimensions supérieures aux dimensions des grains de poudre initiaux peuvent être générées lors de la fabrication additive, par exemple en cas de frittage incomplet de certains grains.

### Post-traitement (E3)

A ce stade du procédé de fabrication, on applique un procédé de post-traitement E3 conforme à l'invention, par exemple un procédé tel que décrit en référence à l'une des **figures 1 à 4****.** Suite au post traitement, les pièces finales obtenues sont dénuées ou quasiment dénuées de particules résiduelles détachées ou susceptibles de se détacher.

### Conditionnement de la poudre (E0)

Afin d'obtenir l'état de surface final souhaité, il est important que la poudre employée pour l'étape de fabrication additive E1, par exemple de PA 11 ou PA 12, présente à l'origine des caractéristiques adéquates. C'est l'objet de l'étape de conditionnement de la poudre E0, préalable à l'étape de fabrication additive E1.

La caractéristique qui apparait la plus importante est la granulométrie de la poudre employée.

Typiquement, la demanderesse a constaté l'importance d'employer une poudre fine et homogène pour éviter les défauts sur la pièce finale.

Pour la production de petites pièces, notamment de pièces comportant des poils, par exemple des applicateurs de produit cosmétique, la poudre employée doit avantageusement ne présenter que des grains dont la plus grande dimension est inférieure à 150 microns. Avantageusement, une poudre encore plus fine peut être employée, à savoir dont la plus grande dimension des grains est inférieure à 80 microns ou à 60 microns.

Les caractéristiques souhaitées, notamment la granulométrie, peut être garantie par la sélection d'une poudre commercialement disponible présentant ces caractéristiques. Néanmoins, pour des raisons évidentes de coûts, il est avantageux de pouvoir remployer de la poudre dite usagée, c'est-à-dire ayant déjà été employée lors d'une étape de fabrication additive E1. Notamment, une partie de la poudre récupérée lors de l'étape de dépoudrage E2 peut être remployée pour un cycle (ou un lot) suivant.

La poudre usagée peut avoir été altérée, comparativement à la poudre neuve, lors de la fabrication additive, même si cette poudre n'est pas liée à la pièce brute fabriquée. Les grains de poudre ont pu être déformés par la chaleur, collés, ou partiellement frittés.

Afin de garantir que la poudre usagée puisse être remployée sans compromettre les caractéristiques du produit final, la poudre usagée récupérée est calibrée par un procédé adapté de tri ou calibration. Notamment un tamisage de la poudre usagée peut être réalisé. Plusieurs types de tamisage peuvent être envisagés afin de séparer de la poudre récupérée, les grains ayant une plus grande dimension supérieure à la dimension maximale souhaitée. Il est notamment possible d'utiliser un tamisage par ultrasons, par micro-vibration et/ou par soufflage.

La dimension maximale souhaitée de la plus grande dimension des grains peut être par exemple de 150 microns, ou 80 microns, ou 60 microns.

Le tri ou tamisage permet la récupération d'une poudre usagée calibrée, qui est adaptée au remploi pour la fabrication additive de pièces similaires à celles produites au cycle précédent.

Dans l'étape de conditionnement de la poudre S0, un mélange de poudre neuve et de poudre usagée calibrée est ainsi réalisé. On tend à remployer au maximum la poudre usagée. Des résultats satisfaisants ont été obtenus, avec une poudre de PA 11, avec un rapport poudre neuve/poudre usagée calibrée compris entre 100/0 et 50/50, notamment compris entre 70/30 et 50/50, par exemple de l'ordre de 60/40.

L'invention propose ainsi un procédé de post-traitement d'une ou plusieurs pièces obtenues par fabrication additive par frittage d'une poudre d'un matériau plastique. Ce post-traitement qui fait se succéder un décapage de la pièce et un soufflage ionisant permet d'éliminer, par le choix de paramètres adaptés dans chacune de ces étapes, les particules détachées ou susceptibles de se détacher de la pièce lors de l'utilisation, même si ces particules sont logées dans des interstices ou dans des poils que comportent la pièce.

L'invention peut s'appliquer à de nombreux types de pièces en plastique, dans divers domaines techniques ou l'absence de particules sur les pièces est importante. L'une des applications préférentielles de l'invention est le post-traitement des applicateurs de produit cosmétique, et en particulier des applicateurs destinés à l'application d'un produit cosmétique à proximité des yeux, comme les brosses à mascara.

Le procédé garantit l'absence de particules de dimensions supérieure à une dimension donnée (par exemple 500 microns).

Le procédé peut également permettre de garantir un nombre maximum de particules dans certaines plages de dimensions (par exemple entre 150 microns et 500 microns).

Un mode de réalisation porte également sur un procédé de fabrication mettant en œuvre un tel procédé de post-traitement, pour l'obtention par fabrication additive de pièces dénuées ou quasiment dénuées de particules, au moins dans certaines plages de dimensions de particules qui ne sont pas souhaitées.

## Revendications

1. Procédé de post-traitement d'une pièce obtenue par fabrication additive par frittage d'une poudre d'un matériau plastique, pour l'élimination des particules détachées de ladite pièce ou partiellement frittées, le procédé comportant des étapes successives de :
- décapage (S1) ; et
- soufflage ionisant (S2).

2. Procédé de post-traitement selon la revendication 1, dans lequel l'étape de décapage comporte une étape de sablage (S1') de ladite pièce.

3. Procédé de post-traitement selon la revendication 2, dans lequel le sablage emploie des microbilles de verre d'un diamètre compris entre 45 et 90 microns.

4. Procédé de post-traitement selon l'une des revendications précédentes, comportant une étape de pré-soufflage préalable à l'étape de décapage (S1).

5. Procédé de post-traitement selon l'une des revendications précédentes, comportant en outre une étape finale de lavage (S3).

6. Procédé de post-traitement selon la revendication 5, dans lequel l'étape de lavage (S3) comporte le lavage de la pièce dans un solvant non-aqueux.

7. Procédé de post-traitement selon l'une des revendications précédentes, dans lequel les étapes de décapage (S1) et de soufflage ionisant (S2) sont réalisées par lots de 300 à 10 000 pièces.

8. Procédé de fabrication d'une pièce en matériau plastique, comportant une étape de fabrication additive (E1) par frittage d'une poudre du matériau plastique, suivie d'une étape de dépoudrage (E2) et d'un procédé de post-traitement (E3) selon l'une des revendications précédentes.

9. Procédé de fabrication selon la revendication 8, dans lequel le matériau plastique est un polyamide, de préférence un polyamide aliphatique, par exemple du polyamide 11.

10. Procédé de fabrication selon la revendication 8 ou la revendication 9, comportant, avant l'étape de fabrication additive (E1), une étape de conditionnement de la poudre (E0) de polyamide comportant :
- la fourniture de poudre neuve ne présentant que des grains dont la plus grande dimension est inférieure ou égale à 150 microns ;
- la fourniture de poudre dite usagée, ayant déjà servi à une étape de fabrication additive, et le calibrage de ladite poudre usagée pour qu'elle ne présente que des grains dont la plus grande dimension est inférieure ou égale à 150 microns ;
- le mélange de la poudre neuve et de la poudre usagée calibrée selon un rapport poudre neuve/poudre usagée compris entre 70/30 et 50/50, de préférence de l'ordre de 60/40.

11. Procédé de production de pièces comportant un procédé de fabrication selon l'une des revendications 8 à 10, **caractérisé en ce qu'**il comporte en outre une étape de qualification (S4) comportant la détermination, dans un lot d'un nombre prédéterminé de pièces, du nombre de particules détachées ou partiellement frittées résiduelles de plus grande dimension supérieure à une dimension prédéfinie, et, si ledit nombre de particules est non nul, la modification d'au moins un paramètre d'une étape du post-traitement, puis la succession de tels procédés de fabrication et d'étapes de qualification (S4) jusqu'à ce que ledit nombre de particules de plus grande dimension supérieure prédéfinie soit nul.

## Patentansprüche

1. Verfahren zur Nachbearbeitung eines Teils, das durch additive Fertigung durch Sintern eines Kunststoffpulvers erhalten wird, zur Entfernung von Partikeln, die sich von dem Teil gelöst haben oder teilgesintert sind, wobei das Verfahren die aufeinanderfolgenden Schritte umfasst:
- Abtragen (S1); und
- ionisierendes Abblasen (S2).

2. Nachbearbeitungsverfahren nach Anspruch 1,
wobei der Schritt des Abtragens einen Schritt des Sandstrahlens (S1') des Teils umfasst.

3. Nachbearbeitungsverfahren nach Anspruch 2,
wobei beim Sandstrahlen Glasmikrokügelchen mit einem Durchmesser zwischen 45 und 90 Mikron verwendet werden.

4. Nachbearbeitungsverfahren nach einem der vorhergehenden Ansprüche, umfassend einen Schritt des Vor-Abblasens vor dem Schritt des Abtragens (S1).

5. Nachbearbeitungsverfahren nach einem der vorhergehenden Ansprüche, ferner umfassend einen abschließenden Schritt des Abwaschens (S3).

6. Nachbearbeitungsverfahren nach Anspruch 5,
wobei der Schritt des Abwaschens (S3) das Abwaschen des Teils in einem nicht-wässrigen Lösungsmittel umfasst.

7. Nachbearbeitungsverfahren nach einem der vorhergehenden Ansprüche, wobei die Schritte des Abtragens (S1) und des ionisierenden Abblasens (S2) in Chargen von 300 bis 10 000 Teilen erfolgen.

8. Verfahren zum Fertigen eines Teils aus Kunststoffmaterial,
umfassend einen Schritt der additiven Fertigung (E1) durch Sintern eines Pulvers aus dem Kunststoffmaterial, gefolgt von einem Schritt des Entstaubens (E2) und einem Nachbearbeitungsverfahren (E3) nach einem der vorhergehenden Ansprüche.

9. Fertigungsverfahren nach Anspruch 8,
wobei das Kunststoffmaterial ein Polyamid, vorzugsweise ein aliphatisches Polyamid, beispielsweise Polyamid 11, ist.

10. Fertigungsverfahren nach Anspruch 8 oder Anspruch 9,
umfassend vor dem Schritt der additiven Fertigung (E1) einen Schritt der Konditionierung des Polyamidpulvers (E0), umfassend:
- Bereitstellen von Neupulver, das nur Körner enthält, deren größte Abmessung kleiner oder gleich 150 Mikrometer ist;
- Bereitstellen von sogenanntem Altpulver, das bereits in einem Schritt der additiven Fertigung verwendet wurde, und Kalibrieren des Altpulvers derart, dass es nur Körner enthält, deren größte Abmessung kleiner oder gleich 150 Mikrometer ist;
- Mischen von Neupulver und kalibriertem Altpulver in einem Verhältnis von Neupulver/Altpulver zwischen 70/30 und 50/50, vorzugsweise in der Größenordnung von 60/40.

11. Verfahren zum Herstellen von Teilen, umfassend ein Fertigungsverfahren nach einem der Ansprüche 8 bis 10,
**dadurch gekennzeichnet, dass**
es ferner einen Schritt der Qualifizierung (S4) umfasst, der das Bestimmen der Anzahl von abgelösten oder teilgesinterten Restpartikeln, deren größte Abmessung größer als eine vorbestimmte Abmessung ist, in einer Charge einer vorbestimmten Anzahl von Teilen umfasst, sowie bei einer Anzahl von Partikeln ungleich Null die Änderung mindestens eines Parameters eines Schrittes der Nachbearbeitung, dann die Aufeinanderfolge solcher Fertigungsverfahren und Qualifizierungsschritte (S4) solange, bis die Anzahl der Partikel mit größter Abmessung größer als die vorbestimmte gleich Null ist.

## Claims

1. Method of post-treatment of a part obtained by additive manufacturing by sintering of a powder of a plastic material, for the elimination of the particles detached from said part or that are partially sintered, the method comprising successive steps of:
- stripping; (S1) and
- ionizing blowing (S2).

2. Method of post-treatment according to claim 1, wherein the stripping step comprises a step of sand-blasting (S1') said part.

3. Method of post-treatment according to claim 2, wherein the sand-blasting employs glass microspheres of a diameter comprised between 45 and 90 microns.

4. Method of post-treatment according to one of the preceding claims, comprising a pre-blowing step prior to the stripping step (S1).

5. Method of post-treatment according to one of the preceding claims, further comprising a final step of washing (S3).

6. Method of post-treatment according to claim 5, wherein the washing step (S3) comprises the washing of the part in a non-aqueous solvent.

7. Method of post-treatment according to one of the preceding claims, wherein the steps of stripping (S1) and ionizing blowing (S2) are carried out in batches of 300 to 10 000 parts.

8. Method of manufacturing a part from plastic material, comprising a step of additive manufacturing (E1) by sintering a powder of the plastic material, followed by a step of depowdering (E2) and a method of post-treatment (E3) according to one of the preceding claims.

9. Manufacturing method according to claim 8, wherein the plastic material is a polyamide, preferably an aliphatic polyamide, for example polyamide 11.

10. Manufacturing method according to claim 8 or claim 9, comprisingprior to the additive manufacturing step (E1), a step of processing of the polyamide powder (E0) comprising:
- providing new powder having only grains of which the greatest dimension is less than or equal to 150 microns;
- providing so-called used powder, having already served for an additive manufacturing step, and the calibration of said used powder in order for it to have only grains of which the greatest dimension is less than or equal to 150 microns;
- mixing the new powder and the calibrated used powder in a new powder/used powder ratio comprised between 70/30 and 50/50, preferably of the order of 60/40.

11. Method of producing parts comprising a manufacturing method according to any one of claims 8 or 10, **characterized in that** it further comprises a qualifying step (S4) comprising determining, in a batch of a predetermined number of parts, the number of residual particles that are detached or partially sintered of largest dimension greater than a predefined dimension, and, if said number particles is not zero, modifying at least one parameter of a post-treatment step, then the succession of such manufacturing methods and qualifying steps until said number of particles of largest dimension greater than a predefined dimension is zero.
